# EUROPEAN PATENT SPECIFICATION

(11) **EP 3 005 623 B1**
(45) Date of publication and mention of the grant of the patent: **09.08.2017**
(21) Application number: 14730593.2
(22) Date of filing: 02.06.2014
(51) Int. Cl.: H04L 12/28

(54) **INTELLIGENT CONNECTOR MODULE FOR ELECTRIC APPLIANCE**
INTELLIGENTES STECKERMODUL FÜR EINE ELEKTRISCHE VORRICHTUNG
MODULE DE CONNECTEUR INTELLIGENT POUR APPAREIL ÉLECTRIQUE

(30) Priority: 06.06.2013 CN 201310225224
(43) Date of publication of application: 13.04.2016
(73) Proprietor: Tyco Electronics (Shanghai) Co., Ltd., Shanghai 200233 (CN)
(72) Inventor: FAN, Mingjie, Shanghai 200233 (CN); SONG, Yuming, Shanghai 200233 (CN); FENG, Yulin, Shanghai 200233 (CN); DAI, Feng, Shanghai 200233 (CN)
(74) Representative: Grünecker Patent- und Rechtsanwälte PartG mbB
(86) International application number: PCT/IB2014/061886
(87) International publication number: WO 2014/195845

(56) References cited:
- US-A- 5 600 310
- US-A1- 2012 239 840
- VAN ZOEST D ET AL: "Implementation of a simulated washing machine with an integrated control panel and intra-appliance local interconnect network bus", INTERNET CITATION, 2002, pages 1-12, XP002535434, Retrieved from the Internet: URL:http://www.duraswitch.com/technology/I ATCPaper2002.pdf [retrieved on 2009-07-02]

## Description

### Field of the invention

The present disclosure relates to the field of electric appliances and more particularly to an intelligent connector module in an electric appliance and an electric appliance using the module.

### Background of the invention

Traditional white home electronic appliances, e.g., a refrigerator, a washing machine, a microwave oven, an air conditioner, etc., generally include therein a host computer board (i.e., a master control board) as well as other peripheral execution components, e.g., a heating wire, a electric motor, an electromagnetic value, etc., and sensor components, e.g., a temperature sensor, a water level sensor, a humidity sensor, etc. All of power supply processing, drive and acquisition circuits are integrated on the master control board and connected directly with relevant components by conductive wires through various attachments and plug-ins to drive the execution components and to acquire relevant information. This design scheme emerged since the birth of the home electronic appliances, and since there were a small number of drive components and sensor components and an insignificant difference between the drive components and the sensor components of different models at that time, such a design facilitates the production and a lower cost and also a convenient maintenance and service thereof and thus has been widely adopted among the white home electric appliances. However along with the development of semiconductor technologies, an increasing number of processors and sensors have been developed and used in the white home electric appliances and play an increasingly important role in the course of making the white home electric appliances intelligent and human-oriented. The number functions of the white home electric appliances is growing and they are becoming increasingly diversified so that the original centralized structure of the host computer board has exhibited its significant drawbacks, for example: the design of the structure is becoming increasingly difficult and there are an increasing number of increasingly complicated connection lines between the master control board and the peripheral execution components as the board with an increasing number of functions is becoming increasingly large, and too many and long bundles of lines tend to result in signal interference between the bundles of lines; separate development of master control boards in the same series of different levels of models may result in a too long design cycle and a waste of design resources, but their unified design may result in numerous redundant design aspects, an increased material cost of products, a high maintenance cost, necessary replacement of the entire master control board due to a failure of some function, etc.

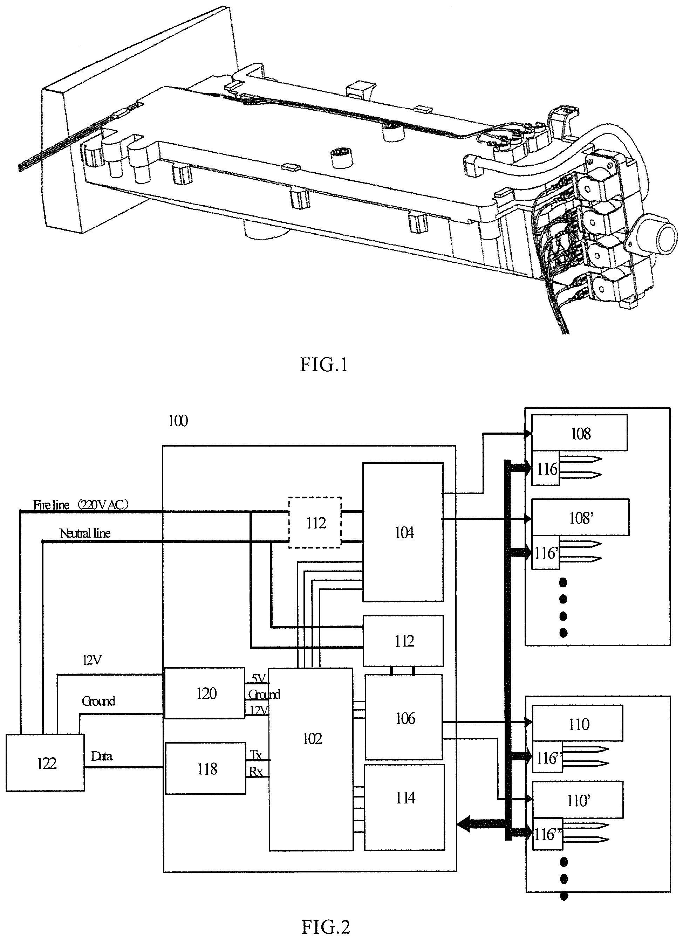

Taking a washing machine among the home electric appliances as an example, the washing machine is an appliance to clean dirty clothing, bed-clothing, etc., in a washing bucket in a washing, rinsing and drying processes using water and a detergent. Water valves and dispensing valves in the washing machine as an important function thereof are an important factor with an influence on the effect of rinsing and the use experience of a user. The structures of the water valves and the dispensing valves in the washing machine are becoming increasingly complicated as the effect of rinsing becomes improved and the rinsing flow becomes simplified constantly, primarily in the following two aspects: firstly there are an increasing and varying number of supported channels, and secondly the dispensing of the detergent and the control on water supply becomes more intelligently and precisely controllable due to the use of a larger number of sensors. In the prior art, the washing machine has the water valves, the dispensing valves and the sensors of the washing machine controlled primarily by a master control module of the washing machine. Washing machines at a series of different levels are typically provided with different numbers of water valves, dispensing valves and sensors dependent upon their different product orientations, for example, a high-end product in the same series may be provided with only four valves, two dispensing valves and two sensors, and a low-end product may be provided with only two valves, one dispensing valve and one sensor. However the same set of master control mother boards tend to be used for the same series of washing machines in view of a cost of research and development. In a traditional implementation in which a master control module of a washing machine is designed, a master control module for the same series of washing machines is designed according to a desirable maximum numbers of water valves and dispensing valves, that is, a master control module is designed according to a demand of the highest-end product, and then a real master control module and peripheral execution components are selected and installed according to functions of a particular model upon production and installation thereof. This may result in a significant design redundancy of master control boards of numerous models and a waste cost thereof. Moreover due to an increasing number of needed channels, there are up to more than ten bundles of lines for connection with the master control module, thus resulting in an increased difficulty of wiring and installation cost in a washing machine. Fig.1 illustrates an existing example of a master control module connected with execution components of a washing machine. Taking as an example a washing machine with four water valves, two dispensing valves and two sensors, there are required four signal lines, four second power supply lines and five first power supply lines, all of which are connected directly with a master control module respectively, so complicated bundles of lines result in difficult assembling, and the too many and long bundles of lines also render the stability of a system insufficient. Therefore there is a need to address these drawbacks by designing home electric appliances in a modular and distributed structure so as to achieve new advancement of the home electric appliances

In the publication of D. Van Zoest and D. Otten "Implementation of a stimulated washing machine with an integrated control panel and intra-appliance local interconnect network bus" distributed by Duraswitch Industries at duraswitch.com in 2009, there is disclosed a simulated washing machine with an integrated appliance control panel and intra-appliance Local Interconnect Network (LIN) bus capability. The control panel allows the integration of pushbutton and rotary controls into thin, low profile assembly with superior graphics and electrical circuit design flexibility. LIN is used as an intra-appliance network to replace bulky wire harnesses, improve manufacturability and reliability, and reduce costs. Only three wires are necessary for communication inside of the appliance. The network can be used to create appliances that are capable of communicating via a home network to manage peak energy usage and add a new level of troubleshooting and field upgrades.

US 2012/239840 discloses a domestic appliance with a bus. A plurality of modules are connected to the bus, each controlling an operational component. Initial programming of the modules may take place from a single connection point. The modules may be configured to control the domestic appliance jointly and non-hierarchically. Suitably, all modules are identical up to content of a data memory provided therein.

US 5 600 310 discloses a household appliance having a serial bus control system and which includes a system controller, a plurality of slave nodes, and a serial bus connector. Each slave node is a sensor, an actuator, or the like, that is coupled to the serial bus connector and is responsive to a particular slave node address code generated by a master communications module that is part of the system controller. The serial bus connector is a loop of conductor which is attached at each end of the loop to the master communication module, with the slave nodes coupled to the loop at intermediate positions along the loop. The master communications module includes an interrogation circuit for generating digital transmissions to one or more of said slave node address codes and a receiver circuit for receipt of digital transmissions from the slave nodes coupled to said serial bus connector. The system controller further includes a processor for receiving sensor signals from slave nodes addressed by the communications module and for generating respective control signals to govern operation of actuators coupled to the serial bus connector.

### Summary of the invention

The invention proposes an intelligent connector module in an electric appliance by integrating complicated and variable control functions of a first execution component and a second execution component and a detection function of a detection unit into a single module with simple and unified power supply and communication interfaces. Advantages thereof lie in that firstly the invention reduces the number of system bundles of line of a master control module and lowers a wiring and installation cost so that the invention reduces the number of system bundles of lines on the master control module (i.e., a master control board) and lowers a wiring and installation cost so that there is a simple and unified general power and signal interface (e.g., five lines in an embodiment of the invention) on the master control module, and this interface independent of the number of channels of execution components will not vary with an increasing number of channels. Secondly the invention has a lower redundant waste and relatively independent module functions, and different modules can be adopted according to a demand for a product without further lowering the design complexity of switch modules of execution components with use of a redundant design. Thirdly in the original structure of direct-connection bundles of lines, all of execution components and sensor components are connected with the master control module through the direct-connection lines, and in view of the cost and installation of the bundles of lines, all the lines are bundled for wiring, and the bundles of lines are not isolated from each other and are arranged in parallel over a very long distance, thus resulting in a hidden danger of interference between high- and low-power devices and of a highly noisy device (e.g., an electric motor) upon a sensitive device (e.g., a temperature or water level sensor) and consequently an increase in failure ratio of the system. With the solution of the intelligent connector module according to the invention, drive and sensing components are modified to be connected as closely as possible to thereby lower mutual interference between various types of signals. Fourthly the invention has good flexibility and a lower cost of designing a new product, and there is a unified interface based upon the modular design, so it will not be necessary to redesign the master control module in hard\ware regardless of an increase or decrease in number of execution components to thereby greatly save a period of time for research and development of the master control module and resources and lower a research and development thereof. Fifthly servicing at a lower cost is facilitated while the entire mother board had to be replaced at a high cost formerly when there was a failure in a switch control section of an execution component. With the modular solution, only the present intelligent connector module will be replaced when there is a failure in a switch control section. Moreover for a signal transmitted in the present module, error correction, check, retransmission acknowledgement and other modern communication signal processing schemes are performed in communication to thereby guarantee excellent reliability of the various types of signals transmitted over a long distance and thus ensure maintained good reliability and stability of the system with increasingly diversified and complicated functions.

According to an embodiment of the invention, there is disclosed an intelligent connector module connected with at least one first execution component in an electric appliance, wherein the intelligent connector module includes a communication and control unit and a first switch array and drive unit, wherein: the communication and control unit is connected with an electric appliance master control module and configured to receive a control signal from the electric appliance master control module; and the first switch array and drive unit is connected with the communication and control unit, the first switch array and drive unit is connected with the first execution component, and the first switch array and drive unit controls operation of the first execution component in response to the control signal received by the communication and control unit.

Particularly the first execution component is a component driven by alternating current, and the first switch array and drive unit provides the first execution component with an AC drive. Particularly a switch device in the first switch array and drive unit is a relay or a silicon controlled rectifier.

Particularly the first execution component is a component driven by direct current, and the first switch array and drive unit provides the first execution component with an DC drive. Particularly the intelligent connector module further includes an AC full-bridge rectification unit connected with the first switch array and drive unit and configured to provide the first execution component with DC driving voltage through the first switch array and drive unit. Particularly a switch device in the first switch array and drive unit is a relay.

Particularly the intelligent connector module further includes a detection unit connected with the communication and control unit and with at least one detected unit located in the first execution component, and the detection unit is configured to establish communication with the detected unit and obtain detection data in response to the control signal received by the communication and control unit from the electric appliance master module, and the communication and control unit is configured to obtain the detection data, feeding back an operation status of the first execution component through the detection unit.

Particularly the intelligent connector module further includes a second switch array and drive unit connected with the communication and control unit and with at least one second execution component and configured to control operation of the second execution component in response to the control signal received by the communication and control unit.

Particularly the second execution component is a component driven by direct current, and the second switch array and drive unit provides the second execution component with an DC drive.

Particularly the intelligent connector module further includes an AC full-bridge rectification unit connected with the second switch array and drive unit and configured to provide the second execution component with DC driving voltage through the second switch array and drive unit.

Particularly a switch device in the second switch array and drive unit is a relay.

Particularly the intelligent connector module further includes a detection unit connected with the communication and control unit and with at least one detected unit located in the first and/or second execution component, and the detection unit is configured to establish communication with the detected unit and obtain detection data in response to the control signal received by the communication and control unit from the electric appliance master module, and the communication and control unit is configured to obtain the detection data, feeding back an operation status of the first execution component through the detection unit.

Particularly the detection data is a voltage value or a frequency value of the detected unit.

Particularly the intelligent connector module further includes a duplex/half-duplex conversion unit connected between the electric appliance master control module and the communication and control unit and configured to adjust a signal interaction mode between the communication and control unit and the electric appliance master control module.

Particularly the intelligent connector module further includes a DC power supply unit connected with the communication and control unit and configured to provide the communication and control unit with a DC operating power supply. Particularly output voltage of the DC power supply unit is a DC voltage at 12 volts and/or 5 volts.

According to an embodiment of the invention, there is further disclosed an electric appliance including the intelligent connector module and the first execution component and/or the second execution component above.

Particularly the electric appliance is a washing machine, a refrigerator or an air conditioner.

### Brief description of drawings

The foregoing and other components of the invention will become apparent from the following detailed description of embodiments illustrated in connection with the drawings and identical or like reference numerals in the drawings of the invention denote identical or like components. In the drawings
Fig.1 illustrates a diagram of an example of a master control board and execution components of a washing machine in the prior art;
Fig.2 illustrates a block diagram of electrical modules of an intelligent connector module 100 according to an embodiment of the invention;
Fig.3 illustrates a block diagram of a modular embodiment of a washing machine using the intelligent connector module 100 according to an embodiment of the invention;
Fig.4 illustrates an example of an example of the washing machine using the intelligent connector module 100 according to an embodiment of the invention; and
Fig.5 illustrates a block diagram of a modular embodiment of an air conditioner using the intelligent connector module 100 according to an embodiment of the invention.

### Detailed description of embodiments

The following particular description of preferred embodiments will be given with reference to the drawings constituting a part of the invention. The drawings exemplarily illustrate particular embodiments in which the invention can be embodied. The exemplary embodiments are not intended to exhaust all the embodiments of the invention. As can be appreciate, other embodiments can be utilized or structural or logical modifications can be made without departing from the scope of the invention. Thus the following particular embodiments are not intended to limit the scope of the invention as defined in the appended claims.

Fig.2 illustrates a block diagram of electrical modules of an intelligent connector module 100 according to an embodiment of the invention. The intelligent connector module 100 is arranged in an electric appliance (not illustrated), and an electric appliance master control module 122 in the electric appliance is connected with the intelligent connector module 100 through five lines which are two AC power supply lines providing an AC power supply, two DC power supply lines providing a DC power supply and a signal line transmitting and receiving information between the intelligent connector module 100 and the electric appliance master control module 122 respectively. The intelligent connector module 100 is further communicatively connected with at least one first execution component 108, and the electric appliance master control module 122 controls operation of the first execution component 108 through the intelligent connector module. Those skilled in the art shall appreciate that a communication protocol of the intelligent connector module according to an embodiment of the invention can be commonly used various bus protocols, e.g., RS485, CAN, LIN, etc., or other point-to-point communication protocols, e.g., RS-232 and also can be a user-customized proprietary communication protocol for establishment of connection with the electric appliance master control module. The number of signal lines in the embodiment can be one or more dependent upon a different option of the communication protocol. Those skilled in the art can appreciate that the master control module and the intelligent connector module according to an embodiment of the invention can be electrically connected via an interface in the form of a connector or directly otherwise.

Particularly the master control module 122 refers to a module configured to control operation of various the respective execution components in the electric appliance. The master control module 122 can generate a control signal for controlling operation of the execution component based upon an instruction generated in response to an input by a user or to a operation application. The master control module 122 can be, for example, a micro control unit, a micro processor unit or another appropriate module composed of electronic device elements.

In the embodiment, the intelligent connector module 100 include a communication and control unit 102 and a first switch array and drive unit 104, where the communication and control unit 102 is communicatively connected with the electric appliance master control module 122 and receives a control signal from the electric appliance master control module 122. The communication and control unit 102 is communicatively connected with the first switch array and drive unit 104, and the first switch array and drive unit 104 is communicatively connected with the first execution component 108. The communication and control unit 102 is configured to parse the control signal of the electric appliance master control module 122 and to control the first switch array and drive unit 104 in response to an instruction of the control signal to have the first execution component 108 run or stopped.

Particularly the communication and control unit 102 includes a communication unit and a control and processing unit (not illustrated). The communication unit performs processes in the communication protocol and in the case of a plurality of nodes further transfers various messages sequentially, on time and reliably between the various nodes via bus protocol communication, and the communication unit also has some error correction, anti-interference and bus failure diagnosis capability. The control and processing unit parses a control instruction and transmits the instruction to the first execution component 108 as required by the instruction to perform a corresponding function or acquires detection signals of respective sensor components, performs corresponding filtering and diagnosis and reports data and a status on a mother board or alters to a failure.

Particularly the first switch array and drive unit refers to an array composed of a plurality of unit switches integrated together and configured to drive an execution component communicatively connected therewith.

Specifically when the electric appliance master control module 122 needs to have the first execution component 108 run or stopped, the master control module 122 generates a control signal for controlling operation of the first execution component 108. After the electric appliance master control module 122 generates the control signal, the electric appliance master control module 122 transmits the control signal to the communication and control unit 102 in the intelligent connector module 100, and the communication and control unit 102 parses the control signal and selects a corresponding switch in the first switch array and drive unit 104 in response to an instruction parsed from the control signal to be closed or opened. In an embodiment, when the first execution component 108 is a component driven by alternating current, the AC power supply lines of the electric appliance master control module 122 is connected with the first switch array and drive unit 104, and when a specific switch in the first switch array and drive unit 104 is closed, the AC power supply is conducted to the first execution component 108 corresponding to the switch so that the first execution component 108 is driven by alternating current to operate normally; and when the switch is opened, the AC power supply can not be conducted to the first execution component 108 through the switch so that the first execution component 108 stops operating. When the first switch array and drive unit 104 is configured to drive the first execution component by alternating current, the switch in the first switch array and drive unit 104 can be embodied as a relay or a silicon controlled rectifier, where the relay can be a solid relay, an electromagnetic relay or another type of relay. Those skilled in the art shall appreciate that when the first execution component 108 is a component driven by direct current, a rectifier, e.g., an AC full-bridge rectification unit 112, can be arranged between the AC power supply lines input to the intelligent connector module 100 and the first switch array and drive unit 104 to rectify an AC signal into a DC signal, and at this time the first switch array and drive unit 104 can provide the first execution component 108 with an DC drive. When the first switch array and drive unit 104 is configured to drive the first execution component by direct current, the switch in the first switch array and drive unit 104 can be embodied as a relay or a silicon controlled rectifier, where the relay can be a solid relay, an electromagnetic relay or another type of relay.

It shall be noted that the number of first execution components illustrated in Fig.2 is merely exemplary, and those skilled in the art shall appreciate that the number of execution components bearable by the first switch array and drive unit is typically more than one and can be two or more in a practical application. Moreover alike the number of the first execution components 108 will not be limited to one and can be two or more but typically will not exceed the largest number of execution components bearable by the first switch array and drive unit 104. A plurality of the first execution components 108 can be of the same type, for example, a plurality of first execution components in a washing machine can be a plurality of identical water valves; or can be execution components of different types, for example, a plurality of first execution components in an air conditioner can be an indoor fan, an auxiliary heater and other components respectively.

In some embodiments, the intelligent connector module 100 further includes a second switch array and drive unit 106, the communication and control unit 102 is connected with the second switch array and drive unit 106, and the second switch array and drive unit 106 is connected with at least one second execution component 110. The communication and control unit 102 parses a control signal of the electric appliance master control module 122 and then controls the second switch array and drive unit 106 in response to an instruction of the control signal to have the second execution component 110 run or stopped, where the second execution component 110 is driven by DC voltage. In this embodiment, there can be included an AC full-bridge rectification unit 112 configured to convert AC output from the AC power supply lines among the five-line bus interface into DC, where the AC full-bridge rectification unit 112 is connected with the second switch array and drive unit 106 and provides the second execution component 110 with the DC drive power supply through the second switch array and drive unit 106.

Particularly when the electric appliance master control module 122 needs to have the second execution component 110 run or stopped, the master control module 122 generates a control signal for controlling operation of the second execution component 110. After the electric appliance master control module 122 generates the control signal, the electric appliance master control module 122 transmits the control signal to the communication and control unit 102 in the intelligent connector module 100, and the communication and control unit 102 parses the control signal and selects a corresponding switch in the second switch array and drive unit 106 in response to an instruction, for which the control signal is parsed, to be closed or opened. In an embodiment, the DC power supply (e.g., the AC full-bridged rectified DC power supply) is connected with the second switch array and drive unit 106, and when a specific switch in the second switch array and drive unit 106 is closed, the DC power supply is conducted to the second execution component 110 corresponding to the switch so that the second execution component 110 is driven to operate normally; and when the switch is opened, the DC power supply can not be conducted to the second execution component 110 through the switch so that the second execution component 110 stops operating. The switch in the second switch array and drive unit 106 can be embodied as a relay or a silicon controlled rectifier, where the relay can be a solid relay, an electromagnetic relay or another type of relay.

It shall be noted that those skilled in the art shall appreciate that the second execution component illustrated in Fig.2 can alternatively be driven by AC voltage. Moreover the number of second execution components is merely exemplary, and the number of execution components bearable by the second switch array and drive unit is typically more than one and can be two or more in a practical application. Moreover alike the number of the second execution components 110 will not be limited to one and can be two or more but typically will not exceed the largest number of execution components bearable by the second switch array and drive unit 106. Particularly a plurality of the second execution components 110 can be of the same type, for example, a plurality of second execution components in a washing machine can be a plurality of identical dispensing valves; or can be execution components of different types, for example, a plurality of second execution components in an air conditioner can be a vertical fan electric motor, a horizontal fan electric motor, a filter grid cleaning electric motor and other components respectively.

In some embodiments, the intelligent connector module 100 further includes a detection unit 114. The detection unit 114 is communicatively connected with the communication and control unit 102, and the detection unit 114 is connected with at least one detected unit 116 located in the first and/or execution component, where the detected unit 116 can be a sensor, an inductor, etc. When the electric appliance master control module 122 needs to obtain detection data in the detected unit 116 in the first and/or execution component, the electric appliance master control module 122 will generate a control signal for controlling the detection unit 114 and send it to the communication and control unit 102, and the communication and control unit parses the control signal upon reception thereof to determine the specific detected unit 116 in which detection data needs to be obtained. Thereafter the detection unit 114 establishes communication with the detected unit 116 to be detected and obtains detection data in the detected unit 116 in response to an instruction of the control signal received by the communication and control unit 102 from the electric appliance master control module. The detection unit 114 obtains and then feeds the detection data back to the communication and control unit 102, and the communication and control unit 102 further transmits the detection data to the electric appliance master control module. In some embodiments, the detection data is a voltage value or a frequency value of the detected unit 116. In some embodiments, the electric appliance master control module analyzes the obtained detection data in the detected unit 116 to decide whether to run or stop the first or the second execution component where the detected unit 116 is located. If the first or second execution component needs to be run or stopped, the electric appliance master control module 122 generates a corresponding control signal and transmits it to the communication and control unit 102. The number of the detected units 116 can be one, two or more in a practical application.

In some embodiments, when the communication and control unit communicates a signal in a duplex mode, the intelligent connector module 100 further includes a duplex/half-duplex conversion unit 118. The duplex/half-duplex conversion unit 118 is connectively connected between the electric appliance master control module 122 and the communication and control unit 102 to convert duplex and half duplex signals between the electric appliance master control module 122 and the communication and control unit 102. The electric appliance master control module 122 communicates with the duplex/half-duplex conversion unit 118 in a half-duplex mode, and the communication and control unit 102 communicates with the duplex/half-duplex conversion unit 118 in a duplex mode. The duplex/half-duplex conversion unit 118 converts a duplex signal of the communication and control unit into a half-duplex signal for communication with the electric appliance master control module 122 and a half-duplex signal of the electric appliance master control module 122 into a duplex signal for communication with the communication and control unit.

In some embodiments, the intelligent connector module 100 further includes a DC power supply unit 120. The DC power supply unit 120 is connected with the communication and control unit 102. The DC power supply unit receives a DC power supply signal from the electric appliance master control module and then translates the signal into a DC signal for use in the operation of an element device in the communication and control unit 102 and provides the element device in the communication and control unit 102 with operating voltage. Particularly the element device in the communication and control unit 102 can include a micro processor configured to control and process information and to control a switch driver in the first switch array and drive unit 104, etc. Those skilled in the art shall appreciate that typically the operating voltage of the micro processor operates is 5 volts, and the operating voltage of the switch driver is 12 volts, so preferably the DC power supply unit outputs voltage at 5 volts and/or 12 volts.

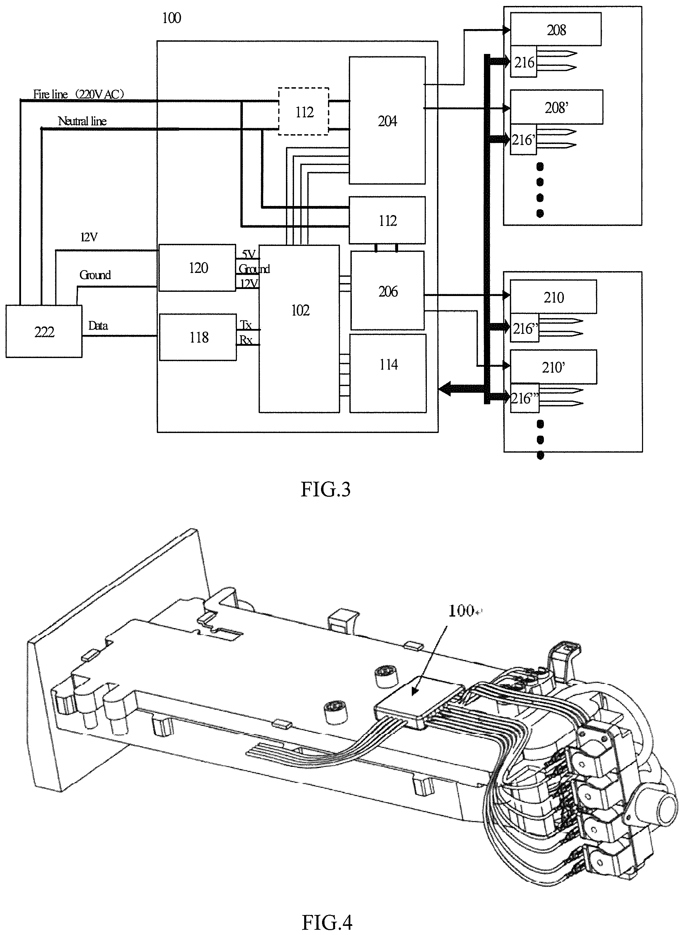

Fig.3 illustrates a block diagram of a modular embodiment of a washing machine using the intelligent connector module 100 according to an embodiment of the invention. The intelligent connector module 100 is arranged in a washing machine (not illustrated), and a washing machine master control board 222 in the washing machine is connected with the intelligent connector module 100 through five lines via a unified power and communication interface, where the five lines are two AC power supply lines providing an AC power supply signal, two DC power supply lines and a signal line transmitting and receiving information between the intelligent connector module 100 and the washing machine master control board 222 respectively. The intelligent connector module 100 is further communicatively connected with at least one water valve 208, and the washing machine master control board 222 controls operation of the water valve 208 through the intelligent connector module 100.

In this embodiment, the intelligent connector module 100 includes a communication and control unit 102 and a water valve switch array and drive unit 204, where the communication and control unit 102 is communicatively connected with the master control board 222 and receives a control signal from the master control board 222. The communication and control unit 102 is communicatively connected with the water valve switch array and drive unit 204, and the water valve switch array and drive unit 204 is communicatively connected with the water valve 208. The communication and control unit 102 is configured to parse the control signal of the master control board 222 and to control the water valve switch array and drive unit 204 in response to an instruction of the control signal to have the water valve 208 to be run or stopped.

Specifically when the master control board 222 needs to have the water valve 208 to be run or stopped, the master control board 222 generates a control signal for controlling operation of the water valve 208. After the master control board 222 generates the control signal, the master control board 222 sends the control signal to the communication and control unit 102 in the intelligent connector module 100. The communication and control unit 102 parses the control signal and selects a corresponding switch in the water valve switch array and drive unit 204 in response to an instruction, for which the control signal is parsed, to be closed or opened. In this embodiment, when the water valve 208 is a component driven by alternating current, the AC power supply lines among the five-line bus interface of the master control board 222 is connected with the water valve switch array and drive unit 204, and when a specific switch in the water valve switch array and drive unit 204 is closed, the AC power supply is conducted to the water valve 208 corresponding to the switch so that the water valve 208 is driven by alternating current to run a water feed job; and when the switch is opened, the AC power supply can not be conducted to the water valve 208 through the switch so that the water value 208 stops operating. When the water valve switch array and drive unit 204 is configured to drive the water value by alternating current, the switch in the water valve switch array and drive unit 204 can be embodied as a relay or a silicon controlled rectifier, where the relay can be a solid relay, an electromagnetic relay or another type of relay. Those skilled in the art shall appreciate that when the water value 208 is a component driven by direct current, a rectifier, e.g., an AC full-bridge rectification unit 112, can be arranged between the AC power supply lines input to the intelligent connector module 100 and the water valve switch array and drive unit 204 to rectify an AC signal into a DC signal, and at this time the water valve switch array and drive unit 204 can provide the water value 208 with an DC drive. When the water valve switch array and drive unit 204 is configured to drive the water valve by direct current, the switch in the water valve switch array and drive unit 204 can be embodied as a relay, where the relay can be a solid relay, an electromagnetic relay or another type of relay.

It shall be noted that the number of water valves illustrated in Fig.3 is merely exemplary, and those skilled in the art shall appreciate that the number of water valves bearable by the water valve switch array and drive unit is typically more than one and can be two or more in a practical application. Moreover alike the number of the water value 208 will not be limited to one and can be two or more but typically will not exceed the largest number of water valves bearable by the water valve switch array and drive unit 204.

In this embodiment, the intelligent connector module 100 further includes a dispensing valve switch array and drive unit 206, where the communication and control unit 102 is communicatively connected with the dispensing valve switch array and drive unit 206, and the dispensing valve switch array and drive unit 206 is communicatively connected with at least one dispensing valve 210. The communication and control unit 102 is configured to parse a control signal of the master control board 222 and to control the dispensing valve switch array and drive unit 206 in response to an instruction of the control signal to have the dispensing valve 210 to be run or stopped, where the dispensing valve 210 is driven by DC voltage. In this embodiment, there is further included an AC full-bridge rectification unit 112 configured to convert AC output from the AC power supply lines among the five-line bus interface into DC, where the AC full-bridge rectification unit 112 is connected with the dispensing valve switch array and drive unit 206 and provides the dispensing valve 210 with the DC drive power supply through the dispensing valve switch array and drive unit 206.

Particularly when the washing machine master control board 222 needs to have the dispensing valve 210 run or stopped, the washing machine master control board 222 generates a control signal for controlling operation of the dispensing valve 210. After the washing machine master control board 222 generates the control signal, the washing machine master control board 222 transmits the control signal to the communication and control unit 102 in the intelligent connector module 100, and the communication and control unit 102 parses the control signal and selects a corresponding switch in the dispensing valve switch array and drive unit 206 in response to an instruction, for which the control signal is parsed, to be closed or opened. In an embodiment, the DC power supply (e.g., the AC full-bridged rectified DC power supply) is connected with the dispensing valve switch array and drive unit 206, and when a specific switch in the second switch array and drive unit 106 is closed, the DC power supply is conducted to the dispensing valve 210 corresponding to the switch so that the dispensing valve 210 is driven to operate normally; and when the switch is opened, the DC power supply can not be conducted to the dispensing valve 210 through the switch so that the dispensing valve 210 stops operating. The switch in the dispensing valve switch array and drive unit 206 can be embodied as a relay, where the relay can be a solid relay, an electromagnetic relay or another type of relay.

It shall be noted that the number of dispensing valves illustrated in Fig.3 is merely exemplary, and those skilled in the art shall appreciate that the number of dispensing valves bearable by the dispensing valve switch array and drive unit is typically more than one and can be two or more in a practical application. Moreover alike the number of the dispensing valves 210 will not be limited to one and can be two or more but typically will not exceed the largest number of dispensing valves bearable by the dispensing valve switch array and drive unit 206.

In this embodiment, the intelligent connector module 100 further includes a detection unit 114. The detection unit 114 is communicatively connected with the communication and control unit 102, and the detection unit 114 is connected with at least one sensor 216 located in the water valve and/or release valve, where the sensor in the water valve can be a water level sensor, and the sensor in the dispensing valve can be a detergent sensor configured to determine the concentration of a detergent in water by measuring a change in resistance value in water. When the washing machine master control board 222 needs to obtain detection data in the water level sensor 216 of the water valve or the sensor 216" of the dispensing valve, the washing machine master control board 222 generates a control signal for controlling the detection unit 114 and send it to the communication and control unit 102, and the communication and control unit parses the control signal upon reception thereof to determine the specific sensor 216 in which detection data needs to be obtained. Thereafter the detection unit 114 establishes communication with the sensor 216 to be detected and obtains detection data in the sensor 216 in response to an instruction of the control signal received by the communication and control unit 102 from the washing machine master control board 222. The detection unit 114 obtains and then feeds the detection data back to the communication and control unit 102, and the communication and control unit 102 further transmits the detection data to the washing machine master control module 222. In some embodiments, the detection data is a voltage valve or a frequency valve of the sensor 216, for example, the detergent sensor can judge whether there is a change in resistance value in water by measuring a voltage value. In some embodiments, the electric appliance master control module analyzes the obtained detection data in the sensor 216 to decide whether to run or stop the water valve or the dispensing valve where the sensor 216 is located. The number of the sensors 216 can be one, two or more in a practical application.

In some embodiments, the intelligent connector module 100 further includes a duplex/half-duplex conversion unit 118. The duplex/half-duplex conversion unit 118 is connectively connected between the washing machine master control board 222 and the communication and control unit 102 to convert duplex and half duplex signals between the washing machine master control board 222 and the communication and control unit 102.

In some embodiments, the intelligent connector module 100 further includes a DC power supply unit 120. The DC power supply unit 120 is connected with the communication and control unit 102. The DC power supply unit receives a DC power supply signal on the electric appliance master control module and then translates the signal into a DC signal for use in the operation of an element device in the communication and control unit 102 and provides the element device in the communication and control unit 102 with operating voltage.

Fig.1 illustrates a diagram of an example of a master control board and execution components of a washing machine in the prior art, and Fig.4 illustrates a diagram of an example of a washing machine using the inventive intelligent connector module 100; and as can be readily apparent from comparison between them, the intelligent connector module 100 has both complicated and variable control functions of execution components and a detection function of a detection unit integrated into a module with a simple and unified power and signal interface to thereby reduce the number of system bundles of lines on the master control module (i.e., the washing machine master control board) and greatly lower mutual interference between various types of signals; and the unified interface can low a maintenance cost, and it will be sufficient to replace only the present intelligent connector module when there is a failure in a switch control section. Moreover for a signal transmitted in the present module, error correction, check, retransmission acknowledgement and other modern communication signal processing schemes are performed in communication to thereby guarantee excellent reliability of the various types of signals transmitted over a long distance and thus ensure maintained good reliability and stability of the system with increasingly diversified and complicated functions.

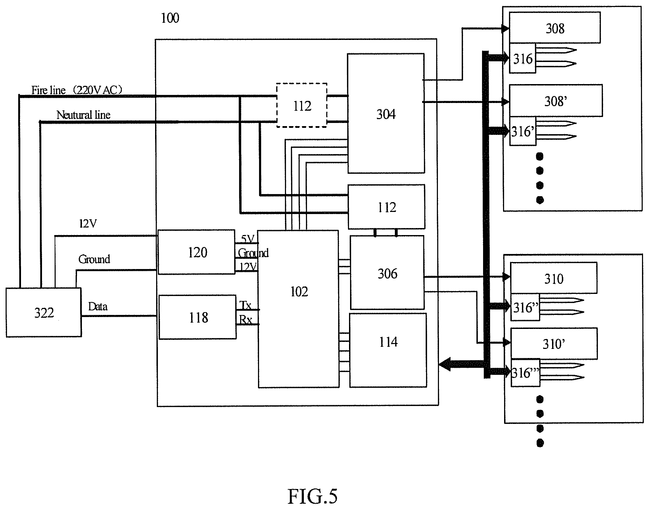

Those skilled in the art shall appreciate that an application of the intelligent connection module as referred to in the invention will not be limited to a washing machine but can also be extended to an air condition, a refrigerator and other electric appliances in a practical application. For example, Fig.5 illustrates a block diagram of a modular embodiment of an air conditioner using the intelligent connector module 100 according to an embodiment of the invention, where an electric appliance master control module 322 is a master control board of the air condition, a first execution component 308 can be an indoor fan, an auxiliary heater or other components, and a second execution component 310 can be a vertical fan electric motor, a horizontal fan electric motor, a filter grid cleaning electric motor or other components respectively. The inventive intelligent connector module can also be equally applicable to the air conditioner illustrated in Fig.5.

Although the invention has been explained and illustrated in details in the drawings and the description, the employment and illustration shall be construed to be illustrative and exemplary but not to be limiting; and the invention will not be limited to the embodiments described above.

Those ordinarily skilled in the art can appreciate and make other variations to the disclosed embodiments upon review of the description, the disclosure and the drawings as well as the appended claims. In the claims, the term "comprising" will not preclude another element or step, and the term "a/an" will not preclude plural. In a practical application of the invention, functions of a plurality of technical features as referred to in a claim may be performed by a single element. Any reference numerals in the claims shall not be construed to limit the scope of the invention.

## Claims

1. An intelligent connector module (100), connected with at least one first execution component (108) in an electric appliance, wherein the intelligent connector module comprises a communication and control unit (102) and a first switch array and drive unit (104), wherein:
the communication and control unit (102) is connected with an electric appliance master control module (122) and configured to receive a control signal from the electric appliance master control module (122); and
the first switch array and drive unit (104) is connected with the communication and control unit (102), the first switch array and drive unit (104) is connected with the first execution component (108), and the first switch array and drive unit (104) is configured to control operation of the first execution component (108) in response to the control signal received by the communication and control unit (102),
wherein the first execution component (108) is a component driven by direct current, and the first switch array and drive unit (104) provides the first execution component (108) with a DC drive,
the intelligent connector module (100) further comprising an AC full-bridge rectification unit (112) connected with the first switch array and drive unit (104) and configured to provide the first execution component (108) with a DC driving voltage through the first switch array.

2. The intelligent connector module (100) according to claim 1, wherein a switch device in the first switch array and drive unit (104) is a relay.

3. The intelligent connector module (100) according to 2, further comprising a detection unit (114) connected with the communication and control unit (102) and with at least one detected unit (116) located in the first execution component (108) and configured to establish a communication with the detected unit (116) and to obtain detection data in response to the control signal received by the communication and control unit (102) from the electric appliance master module (122), wherein the communication and control unit (102) is configured to obtain the detection data, feeding back an operation status of the first execution component (108), through the detection unit (114).

4. The intelligent connector module (100) according to claim 3, wherein the detection data is a voltage value or a frequency value of the detected unit (116).

5. The intelligent connector module (100) according to claim 4, further comprising a duplex/half-duplex conversion unit (118) connected between the electric appliance master control module (122) and the communication and control unit (102) and configured to adjust a signal interaction mode between the communication and control unit (102) and the electric appliance master control module (122).

6. The intelligent connector module (100) according to claim 5, further comprising a DC power supply unit (120) connected with the communication and control unit (102) and configured to provide the communication and control unit (102) with a DC operating power supply.

7. The intelligent connector module (100) according to claim 6, wherein output voltage of the DC power supply unit (120) is a DC voltage at 12 volts and/or 5 volts.

8. An electric appliance, comprising the intelligent connector module (100) according to any one of claims 1 to 7 and a first execution component (108) and/or a second execution component (110).

9. The electric appliance according to claim 8, wherein the electric appliance is a washing machine, a refrigerator or an air conditioner.

## Patentansprüche

1. Intelligentes Verbinder-Modul (100), das mit wenigstens einer ersten Ausführungs-Komponente (108) in einem elektrischen Gerät verbunden ist, wobei das intelligente Verbinder-Modul eine Kommunikations-und-Steuer-Einheit (102) sowie eine erste Schaltanordnungs-und-Ansteuer-Einheit (104) umfasst, und wobei:
die Kommunikations-und-Steuer-Einheit (102) mit einem Haupt-Steuer-Modul (122) des elektrischen Gerätes verbunden und so konfiguriert ist, dass sie ein Steuer-Signal von dem Haupt-Steuer-Modul (122) des elektrischen Gerätes empfängt; und
die erste Schaltanordnungs-und-Ansteuer-Einheit (104) mit der Kommunikations-und-Steuer-Einheit (102) verbunden ist, die erste Schaltanordnungs-und-Ansteuer-Einheit (104) mit der ersten Ausführungs-Komponente (108) verbunden ist und die erste Schaltanordnungs-und-Ansteuer-Einheit (104) so konfiguriert ist, dass sie Funktion der ersten Ausführungs-Komponente (108) in Reaktion auf das durch die Kommunikations-und-Steuer-Einheit (102) empfangene Steuer-Signal steuert,
die erste Ausführungs-Komponente (108) eine mit Gleichstrom angesteuerte Komponente ist und die erste Schaltanordnungs-und-Ansteuer-Einheit (104) der ersten Ausführungs-Komponente (108) eine Gleichstrom-Ansteuerung bereitstellt,
das intelligente Verbinder-Modul (100) des Weiteren eine Wechselstrom-Vollbrücken-Gleichrichtungs-Einheit (112) umfasst, die mit der ersten Schaltanordnungs-und-Ansteuer-Einheit (104) verbunden und so konfiguriert ist, dass sie der ersten Ausführungs-Komponente (108) über die erste Schaltanordnung eine Ansteuer-Gleichspannung bereitstellt.

2. Intelligentes Verbinder-Modul (100) nach Anspruch 1, wobei eine Schaltvorrichtung in der ersten Schaltanordnungs-und-Ansteuer-Einheit (104) ein Relais ist.

3. Intelligentes Verbinder-Modul (100) nach Anspruch 2, das des Weiteren eine Erfassungs-Einheit (114) umfasst, die mit der Kommunikations-und-Steuer-Einheit (102) und mit wenigstens einer erfassten Einheit (116) verbunden ist, die sich in der ersten Ausführungs-Komponente (108) befindet, und die so konfiguriert ist, dass sie eine Verbindung mit der erfassten Einheit (116) herstellt und in Reaktion auf das durch die Kommunikations-und-Steuer-Einheit (102) von dem Haupt-Modul (122) des elektrischen Gerätes empfangene Steuer-Signal Erfassungs-Daten gewinnt, wobei die Kommunikations-und-Steuer-Einheit (102) so konfiguriert ist, dass sie die Erfassungs-Daten, die einen Betriebsstatus der ersten Ausführungs-Komponente (108) zurückführen, über die Erfassungs-Einheit (114) gewinnt.

4. Intelligentes Verbinder-Modul (100) nach Anspruch 3, wobei die Erfassungs-Daten ein Spannungs-Wert oder ein Frequenz-Wert der erfassten Einheit (116) sind.

5. Intelligentes Verbinder-Modul (100) nach Anspruch 4, das des Weiteren eine Duplex/Halbduplex-Umwandlungs-Einheit (118) umfasst, die zwischen das Haupt-Steuer-Modul (122) des elektrischen Gerätes und die Kommunikations-und-Steuer-Einheit (102) geschaltet und so konfiguriert ist, dass sie einen Signal-Interaktionsmodus zwischen der Kommunikations-und-Steuer-Einheit (102) und dem Haupt-Steuer-Modul (122) des elektrischen Gerätes einstellt.

6. Intelligentes Verbinder-Modul (100) nach Anspruch 5, das des Weiteren eine Gleichstrom-Energieversorgungs-Einheit (120) umfasst, die mit der Kommunikations-und-Steuer-Einheit (102) verbunden und so konfiguriert ist, dass sie der Kommunikations-und-Steuer-Einheit (102) eine Gleichstrom-Betriebs-Energieversorgung bereitstellt.

7. Intelligentes Verbinder-Modul (100) nach Anspruch 6, wobei die Ausgangsspannung der Gleichstrom-Energieversorgungs-Einheit (120) eine Gleichspannung von 12 V und/oder 5 V ist.

8. Elektrisches Gerät, das das intelligente Verbinder-Modul (100) nach einem der Ansprüche 1 bis 7 sowie eine erste Ausführungs-Komponente (108) und/oder eine zweite Ausführungs-Komponente (110) umfasst.

9. Elektrisches Gerät nach Anspruch 8, wobei das elektrische Gerät eine Waschmaschine, ein Kühlschrank oder eine Klimaanlage ist.

## Revendications

1. Module de connexion intelligent (100), connecté à au moins un premier composant d'exécution (108) dans un appareil électrique, le module de connexion intelligent comprenant une unité de communication et de commande (102) et une première unité de réseau de commutateurs et de pilotage (104),
l'unité de communication et de commande (102) étant connectée à un module de commande maître d'appareil électrique (122), et conçue pour recevoir un signal de commande du module de commande maître d'appareil électrique (122), et
la première unité de réseau de commutateurs et de pilotage (104) étant connectée à l'unité de communication et de commande (102), la première unité de réseau de commutateurs et de pilotage (104) étant connectée au premier composant d'exécution (108), et la première unité de réseau de commutateurs et de pilotage (104) étant conçue pour commander le fonctionnement du premier composant d'exécution (108) en réponse au signal de commande reçu par l'unité de communication et de commande (102),
le premier composant d'exécution (108) étant un composant piloté par courant continu, et la première unité de réseau de commutateurs et de pilotage (104) fournissant un pilotage à CC au premier composant d'exécution (108), et
le module de connexion intelligent (100) comprenant en outre une unité de redressement à pont complet à CA (112) connectée à la première unité de réseau de commutateurs et de pilotage (104) et conçue pour fournir au premier composant d'exécution (108) une tension de pilotage à CC par l'intermédiaire du premier réseau de commutateurs.

2. Module de connexion intelligent (100) selon la revendication 1, dans lequel un dispositif de commutation dans la première unité de réseau de commutateurs et de pilotage (104) est un relais.

3. Module de connexion intelligent (100) selon la revendication 2, comprenant en outre une unité de détection (114) connectée à l'unité de communication et de commande (102) et à au moins une unité détectée (116) située dans le premier composant d'exécution (108), et conçue pour établir une communication avec l'unité détectée (116) et pour obtenir une donnée de détection en réponse au signal de commande reçu par l'unité de communication et de commande (102) en provenance du module maître d'appareil électrique (122), l'unité de communication et de commande (102) étant conçue pour obtenir la donnée de détection, rétroalimentant un état de fonctionnement du premier composant d'exécution (108), par l'intermédiaire de l'unité de détection (114).

4. Module de connexion intelligent (100) selon la revendication 3, dans lequel la donnée de détection est une valeur de tension ou une valeur de fréquence de l'unité détectée (116).

5. Module de connexion intelligent (100) selon la revendication 4, comprenant en outre une unité de conversion duplex/semi-duplex (118) connectée entre le module de commande maître d'appareil électrique (122) et l'unité de communication et de pilotage (102), et conçue pour régler un mode d'interaction de signal entre l'unité de communication et de commande (102) et le module de commande maître d'appareil électrique (122).

6. Module de connexion intelligent (100) selon la revendication 5, comprenant en outre une unité d'alimentation à CC (120) connectée à l'unité de communication et de commande (102), et conçue pour fournir une alimentation de fonctionnement à CC à l'unité de communication et de commande (102).

7. Module de connexion intelligent (100) selon la revendication 6, dans lequel la tension de sortie de l'unité d'alimentation à CC (120) est une tension à CC à 12 volts et/ou 5 volts.

8. Appareil électrique, comprenant le module de connexion intelligent (100) selon l'une quelconque des revendications 1 à 7, et un premier composant d'exécution (108) et/ou un second composant d'exécution (110).

9. Appareil électrique selon la revendication 8, l'appareil électrique étant une machine à laver, un réfrigérateur ou un climatiseur.
